# EUROPEAN PATENT SPECIFICATION

(11) **EP 4 032 726 B1**
(45) Date of publication and mention of the grant of the patent: **06.09.2023**
(21) Application number: 21216013.9
(22) Date of filing: 20.12.2021
(51) Int. Cl.: B60C 11/03, B60C 9/06, B60C 11/12

(54) **MOTORCYCLE TIRE AND FRONT AND REAR MOTORCYCLE TIRES**
MOTORRADREIFEN UND VORDER- UND HINTERRADREIFEN FÜR MOTORRÄDER
PNEU DE MOTOCYCLETTE ET PNEUS AVANT ET ARRIÈRE DE MOTOCYCLETTE

(30) Priority: 25.01.2021 JP 2021009763
(43) Date of publication of application: 27.07.2022
(73) Proprietor: Sumitomo Rubber Industries, Ltd., Kobe-shi, Hyogo-ken 651-0072 (JP)
(72) Inventor: ICHIRYU, Yutaka, Kobe-shi 651-0072 (JP)
(74) Representative: Manitz Finsterwald Patent- und Rechtsanwaltspartnerschaft mbB

(56) References cited:
- CN-A- 107 415 596
- JP-A- 2007 099 147
- JP-B2- 6 564 303
- US-A1- 2020 282 775

## Description

### BACKGROUND OF THE INVENTION

### FIELD OF THE INVENTION

The present invention relates to a motorcycle tire and a set of front and rear motorcycle tires.

### BACKGROUND ART

JP 2019-104329 A discloses a motorcycle tire whose tread portion is provided with main grooves having a groove width of more than 2 mm and narrow grooves having a groove width of 2 mm or less. The main grooves and the narrow grooves are inclined with respect to the tire circumferential direction.

JP 6564303 B2 discloses a motorcycle tire according to the preamble of claim 1. Other motorcycle tires are disclosed, for example, in US 2020/0282775 A1, CN 107415596 A and JP 2007099147 A.

### SUMMARY OF THE INVENTION

### PROBLEMS TO BE SOLVED BY THE INVENTION

In the case of a bias-ply motorcycle tire whose tread portion is not provided with a belt layer for providing a hoop effect, generally, the rubber thickness of the tread portion becomes larger in tread shoulder regions, and the rigidity becomes higher in the tread shoulder regions, so there is a problem such that handling performance is liable to deteriorate.

Here, the handling performance means easiness of handling operation in which the vehicle body is leant to give a camber angle to the tires when turning the motorcycle.

On the other hand, if a large number of grooves and sipes are provided in the tread portion, there is a problem such that grip performance is liable to deteriorate.

The present invention was made in view of the above circumstances, and a primary objective of the present invention is to provide a motorcycle tire capable of improving the handling performance and the grip performance.

This object is achieved with a motorcycle tire having the features of claim 1 or a combination of a front and a rear tire for motorcycle having the features of claim 10. Subclaims are directed to preferable embodiments.

According to the present invention, a motorcycle tire comprises:
a carcass having a bias-ply structure, and
a tread portion provided with main grooves and sipes,
wherein
the tread portion comprises a pair of axially outer shoulder regions and a crown region therebetween,
the main grooves include first main grooves extending from the crown region into one of the shoulder regions, and second main grooves extending from the crown region into the other of the shoulder regions, and
the sipes are formed only within the shoulder regions,
wherein
the shoulder regions are defined as extending axially inwardly from respective tread edges of the tread portion to have a developed axial width of 30 % of a developed axial width of the tread portion between the tread edges,
and wherein the first main grooves, the second main grooves and the sipes are arranged without being connected to each other.

### BRIEF DESCRIPTION OF THE DRAWINGS

FIG. 1 is a developed partial view of a tread portion of a motorcycle tire as an embodiment of the present invention.
FIG. 2 is a cross-sectional view of the motorcycle tire taken along line A-A of FIG. 1.

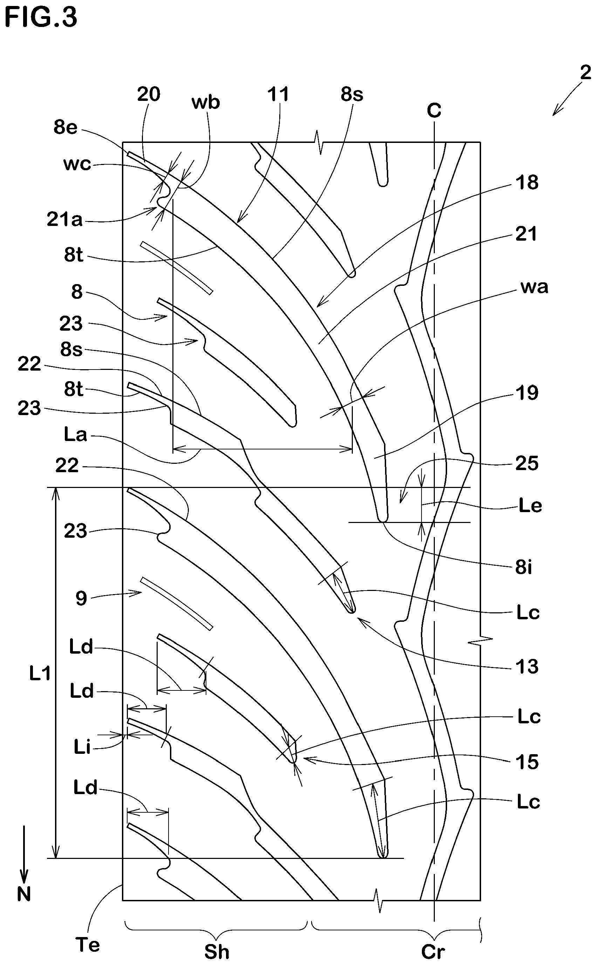

FIGS. 3-5 are developed partial views of the tread portion which are the same views but differently provided with reference numbers and signs.
FIG. 6 is a cross-sectional view of one of the sipes taken along the longitudinal direction of the sipe.
FIG. 7 is a developed partial view of a tread portion of a motorcycle tire as another embodiment of the present invention.

### DETAILED DESCRIPTION OF THE INVENTION

The present invention is suitably applied to on-road motorcycle tires for driving on well-paved roads such as dry asphalt roads although the present invention is not limited to such use conditions.

Hereinafter, embodiments of the present invention will be described with reference to the accompanying drawings.

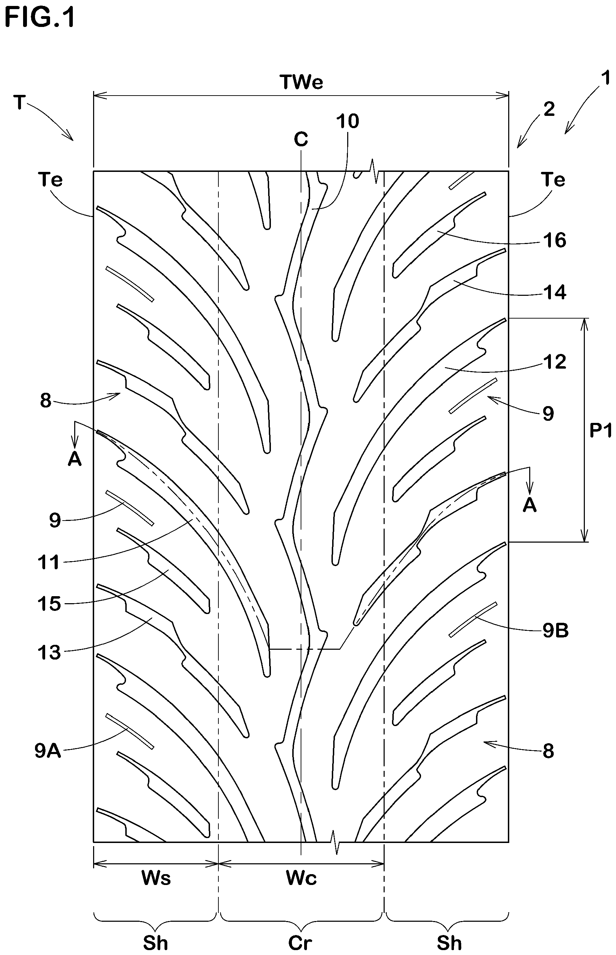

FIG. 1 shows a part of the developed tread portion 2 of a motorcycle tire 1 as an embodiment of the present invention.

In the embodiment of the present invention (further denoted as "present embodiment") the tire 1 is designed for on-road driving such as on dry asphalt roads.

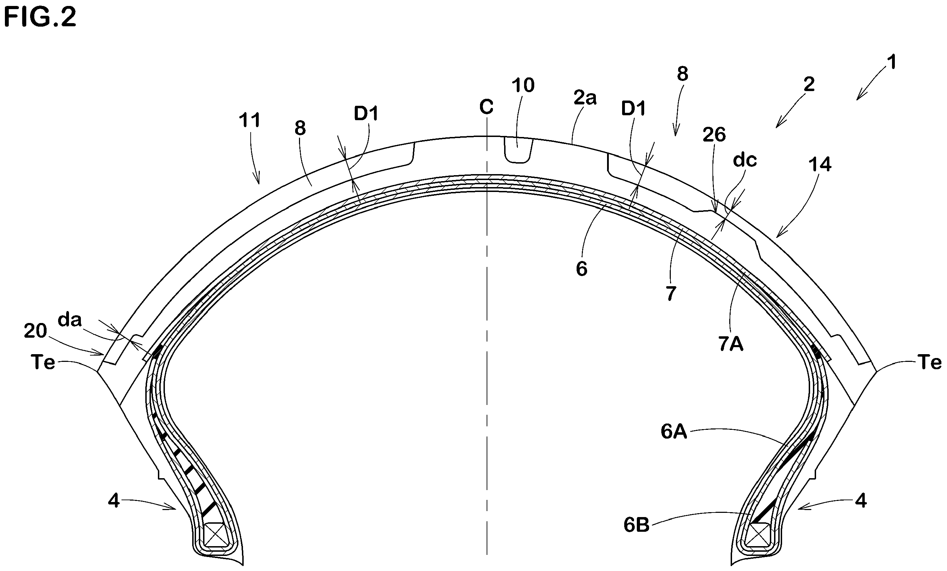

FIG. 2 is a cross-sectional view taken along line A-A of FIG. 1. As shown in FIG. 2, the tread portion 2 has a tread surface 2a curved in an arc shape which is radially outwardly convex so that a sufficient ground contact area can be obtained even when turning with a large camber angle.

The tire 1 comprises a carcass 6 extending between bead portions 4, and a band 7 disposed radially outside the carcass 6 in the tread portion 2.

The carcass 6 in this embodiment is composed of two carcass plies 6A and 6B having a bias-ply structure.

Each carcass ply 6A and 6B is composed of carcass cords arranged at an angle of 30 to 45 degrees with respect to the tire circumferential direction.

The band 7 is composed of at least one, in the present embodiment, only one ply 7A of one or more band cords wound spirally at an angle of 5 degrees or less with respect to the tire circumferential direction.

As shown in FIG. 1, the tread portion 2 has a pair of shoulder regions Sh and a crown region Cr therebetween.

The shoulder regions Sh extend axially inwardly from respective tread edges Te of the tread portion 2, and each have a developed axial width Ws of 30% of the developed tread width TWe.

The crown region Cr is a region on which a large ground contact pressure acts mainly during traveling straight.

Each shoulder region Sh is a region on which a large contact pressure acts mainly during turning.

The developed tread width TWe is the distance in the tire axial direction measured between the tread edges Te along the tread surface in the tire meridian section (FIG.1).

The developed axial width is the distance in the tire axial direction measured along the tread surface in the tire meridian section (FIG. 1).

The tread portion 2 is provided with a plurality of main grooves 8 and a plurality of sipes 9.

The tread portion 2 in the present embodiment is further provided with a circumferential groove 10 extending continuously in the tire circumferential direction.

In this application, the term "groove" means a groove whose a maximum groove width is more than 1.5 mm, and
the term "sipe" means a very narrow groove whose a maximum groove width is not more than 1.5 inclusive of a cut having no substantial groove width. In the present application, dimensions relating to the tire refer to values measured in a normal state of the tire 1 unless otherwise noted.

The "normal state" is a state of the tire 1 which is mounted on a normal rim (not shown) and inflated to a normal pressure and loaded with no tire load.

The "normal rim" is a wheel rim specified for the tire by a standard included in a standardization system on which the tire is based, for example, the "standard rim" in JATMA, the "Design Rim" in TRA., the "Measuring Rim" in ETRTO, and the like.

The "normal pressure" is air pressure specified for the tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

The main grooves 8 include
first main grooves 11 extending from the crown region Cr into one of the shoulder regions Sh (left side in the figure), and
second main grooves 12 extending from the crown region Cr into the other of the shoulder regions Sh (right side in the figure).

The first main grooves 11 and the second main grooves 12 can relax the rigidity of the tread portion 2 in the shoulder regions Sh even when the rubber thickness of the tread portion 2 is larger in the shoulder regions Sh. Therefore, in the tire 1 of the present embodiment, ground contact property of the shoulder regions Sh with the road surface at the time of turning is improved, and thus the handling performance is improved.

The sipes 9 are formed only within the shoulder regions Sh. There are no sipes in the crown region Cr. Therefore, the rigidity of the tread portion is suppressed from being excessively lowered in the crown region Cr. As a result, excellent grip performance may be exhibited.

The sipes 9 include first sipes 9A disposed in one of the shoulder regions Sh, and second sipes 9B disposed in the other of the shoulder regions Sh.

The tread portion 2 in the present embodiment as shown in FIG. 1 is suitably applied to a front tire of a motorcycle (not shown) although it can be applied to a rear tire.

In the present embodiment, the first main grooves 11, the second main grooves 12, and the sipes 9 are arranged without being connected to each other in order to suppress the rigidity of the tread portion 2 from being largely decreased.

In the present embodiment, the main grooves 8 further include third main grooves 13, fourth main grooves 14, fifth main grooves 15, and sixth main grooves 16.

The third main grooves 13 are arranged adjacently to the respective first main grooves 11 on one side in the tire circumferential direction, and extends from the crown region Cr into one of the shoulder regions Sh so as to have an axial length smaller than that of the first main grooves 11.

The fourth main grooves 14 are arranged adjacently to the respective second main grooves 12 on the above-said one side in the tire circumferential direction, and
extends from the crown region Cr into the other of the shoulder regions Sh so as to have an axial length smaller than that of the second main grooves 12.

The fifth main grooves 15 are disposed within one of the shoulder regions Sh.

The sixth main grooves 16 are disposed within the other of the shoulder regions Sh.

The first main grooves 11 are shifted in the tire circumferential direction from the second main grooves 12, and the shape of each first main groove 11 and the shape of each second main groove 12 are line-symmetrical with respect to the tire equator C.

The descriptions of the first main grooves 11 can be applied to the second main grooves 12, therefore, the descriptions of the second main grooves 12 may be omitted thereafter.

The third main grooves 13 are shifted in the tire circumferential direction from the fourth main grooves 14, and the shape of each third main groove 13 and the shape of each fourth main groove 14 are line-symmetrical with respect to the tire equator C. The descriptions of the third main grooves 13 can be applied to the fourth main grooves 14, therefore, the descriptions of the fourth main grooves 14 may be omitted thereafter.

The fifth main grooves 15 are shifted in the tire circumferential direction from the sixth main grooves 16, and the shape of each fifth main groove 15 and the shape of each sixth main groove 16 are line-symmetrical with respect to the tire equator C. The descriptions of the fifth main grooves 15 can be applied to the sixth main grooves 16. therefore, the descriptions of the sixth main grooves 16 may be omitted thereafter.

As shown in FIG. 1, while the main grooves 8 extend from their axially inner ends to axially outer ends, the main grooves 8 are inclined to one side in the tire circumferential direction (upper side in the figure).

That is, the first main grooves 11, the third main grooves 13, and the fifth main grooves 15 are inclined upward to the left, and the second main grooves 12, the fourth main grooves 14, and the sixth main grooves 16 are inclined upward to the right.

Such main grooves 8 can make the flow of water in the grooves smooth by specifying the tire rotational direction, and high drainage performance can be exhibited.

In the present embodiment, the main grooves 8 include a widening portion 18 in which the groove width increases towards the axially outside and which is formed in one of the shoulder regions Sh.

In the present embodiment, each of the first main grooves 11 and the second main grooves 12 is provided with the widening portion 18.

Such widening portions 18 further improve the ground contact property of the shoulder regions Sh with the road surface at the time of turning.

In the present embodiment, the widening portions 18 extend from the crown region Cr to the respective shoulder regions Sh.

The widening portion 18 may be defined as having a difference (wb-wa) between the minimum groove width (wa) and the maximum groove width (wb) which is 3% or more of the axial length La between them. In other words, if less than 3%, such portion is regarded as a subatantially constant width portion.

The main grooves 8 are terminated without reaching the respective tread edges Te in order to maintain the rigidity of the shoulder regions Sh high.

The developed axial distance Li between the axially outer end 8e of each main groove 8 and the tread edge Te is preferably 1 mm or more, more preferably 2 mm or more.

The developed axial distance Li is preferably 30% or less, more preferably 25% or less of the developed axial width Ws of the shoulder region Sh.

In this embodiment, the sipes 9 are also terminated without reaching the respective tread edges Te.

Each of the main grooves 8 has a pair of groove edges 8s and 8t extending in the longitudinal direction of the groove, wherein the groove edge 8s is positioned on the axially inner side of the groove edge 8t.

Each of the main grooves 8 comprises
a first decreasing-width portion 19 in which the groove width decreases toward the axially inner end 8i,
a second decreasing-width portion 20 in which the groove width decreases toward the axially outer end 8e, and
a main portion 21 connecting between the first decreasing-width portion 19 and the second decreasing-width portion 20.

The first decreasing-width portion 19 includes the axially inner end 8i.

The second decreasing-width portion 20 includes the axially outer end 8e. The main portion 21 includes a maximum width position 21a at which the maximum groove width wb of the main groove 8 occurs.

The first decreasing-width portion 19 and the second decreasing-width portion 20 maintain the rubber volume of the tread portion 2 large, and suppress an excessive decrease in rigidity of the tread portion 2.

In the present embodiment, the first decreasing-width portions 19 is formed by a portion where one of the groove edges 8s and 8t extends at a smaller angle with respect to the tire circumferential direction than the other of the groove edges 8s and 8t.

In the present embodiment, the angle with respect to the tire circumferential direction of the groove edge 8s positioned on the axially inner side is smaller than that of the groove edge 8t positioned on the axially outer side.

In the present embodiment, the groove width in the first decreasing-width portion 19 is continuously decreased from the main portion 21.

In order to improve grip performance and drainage performance, it is preferable that the rotation direction N of the tire is specified such that the groove edge 8s and the groove edge 8t are on the toe side and heel side, respectively, in the rotation direction N.

The length Lc of the first decreasing-width portion 19 of each of the first, second, third and fourth main grooves 11-14 is preferably 5% or more, more preferably 10% or more, but preferably 30% or less, more preferably 25% or less of the developed axial width Wc of the crown region Cr.

The length Lc of the first decreasing-width portion 19 of each of the fifth and sixth main grooves 15 and 16 is preferably 3% or more, more preferably 5% or more, but 17% or less, more preferably 15% or less of the developed axial width Ws of the shoulder region Sh.

Here, the length Lc of the first decreasing-width portion 19 is the length along the widthwise center line.

Thereby, the handling performance and grip performance are enhanced. Further, the first decreasing-width portion 19 suppresses the occurrence of groove bottom cracks.

In each of the second decreasing-width portions 20,
one groove edge 8s comprises an arc-shaped portion 22 connecting between the main portion 21 and the second decreasing-width portion 20 with a smooth arc, and
the other groove edge 8t comprises a crank-shaped portion 23 bent in a direction to reduce the groove width.

Each of the second decreasing-width portions 20 is a portion in which the groove width is abruptly reduced as compared with the main portion 21.

In each of the main grooves 8, the maximum groove width wc in the second decreasing-width portion 20 is preferably 15% or more, more preferably 20% or more, but preferably 50% or less, more preferably 40% or less of the maximum groove width wb of the main groove 8.

In each of the main grooves 8, the axial length Ld of the second decreasing-width portion 20 is preferably 15% or more, more preferably 20% or more, but preferably 30% or less, more preferably 25% or less of the developed axial width Ws of the shoulder region Sh.

In each of the main grooves 8, the maximum depth da in the second decreasing-width portion 20 is preferably 15% or more, more preferably 20% or more, but preferably 50% or less, more preferably 40% or less of the maximum groove depth D1 (shown in FIG. 2) of the main groove 8.

Such second decreasing-width portion 20 enhances the grip performance and handling performance, and suppresses the occurrence of groove bottom cracks.

The maximum groove depth D1 of each of the main grooves 8 is preferably 3.8 mm or more, more preferably 4.0 mm or more, but preferably 8.0 mm or less, more preferably 7.2 mm or less.

In the tire circumferential direction, each of the first main grooves 11 overlaps with the circumferentially adjacent two of the first main grooves 11, forming circumferential overlap portions 25.

Such first main grooves 11 further relax the rigidity of the tread portion 2, enhances the ground contact property with the road surface, and improves the handling performance.

The circumferential length Le of the circumferential overlap portion 25 is preferably 5% or more, more preferably 8% or more, but preferably 15% or less, more preferably 12% or less of the circumferential length L1 of the first main groove 11.

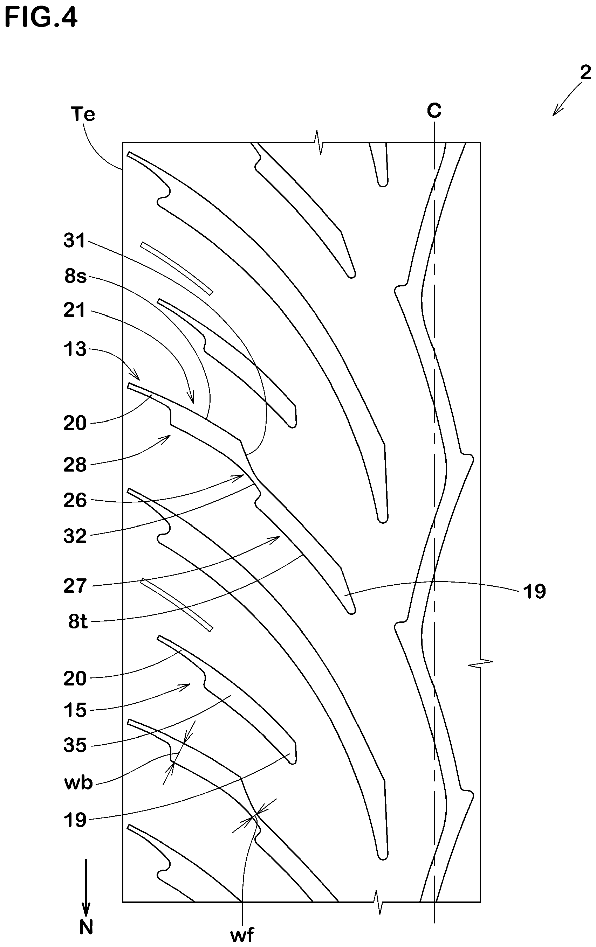

As shown in FIG. 4, the groove width of the third main groove 13 becomes smaller in the middle in the longitudinal direction, forming a constricted portion 26.

The main portion 21 of the third main groove 13 includes:
the constricted portion 26;
a first constant-width portion 27 having a constant groove width and connecting between the constricted portion 26 and the first decreasing-width portion 19; and
a second constant-width portion 28 having a constant groove width and connecting between the constricted portion 26 and the second decreasing-width portion 20.

In the constricted portion 26,
one groove edge 8s is formed by an arc portion 31 extending in an arc shape which is convex toward the groove center line, and
the other groove edge 8t is formed by a crank shape portion 32 extends in a crank shape bent in a direction to reduce the groove width.

FIG. 2 shows a groove depth distribution of the fourth main groove 14. As shown, the minimum groove depth dc in the constricted portion 26 is preferably 10% or more, more preferably 20% or more, but preferably 50% or less, more preferably 40% or less of the maximum groove depth D1 of the fourth main groove 14.

In both end portions of the constricted portion 26, the groove depth gradually smoothly increases toward the both ends.

As shown in FIG. 4, the minimum groove width wf in the constricted portion 26 is preferably 10% or more, more preferably 20% or more, but preferably 50% or less, more preferably 40% or less of the maximum groove width wb of the third main groove 13.

Such constricted portion 26 suppresses the occurrence of groove bottom cracks.

The fifth main groove 15 comprises a third constant-width portion 35 having a constant groove width, and disposed between the first decreasing-width portion 19 and the second decreasing-width portion 20.

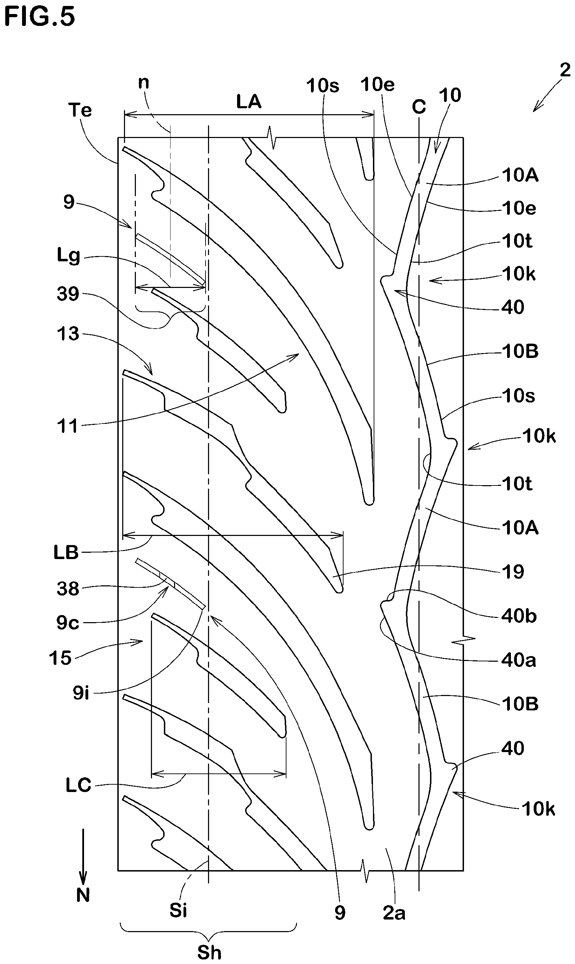

As shown in FIG. 5, the developed axial length LA of the first main groove 11 is preferably 30% or more, more preferably 35% or more, but preferably 50% or less, more preferably 45% or less of the developed tread width TWe.

The developed axial length LB of the third main groove 13 is preferably 25% or more, more preferably 30% or more, but preferably 45% or less, more preferably 40% or less of the developed tread width TWe.

The developed axial length LC of the fifth main groove 15 is preferably 25% or more, more preferably 30% or more, but preferably 45% or less, more preferably 40% or less of the developed tread width TWe.

As shown in FIG. 1, while the sipes 9 extend from their axially inner ends to axially outer ends, the sipes 9 inclined to one side in the tire circumferential direction (upper side in the figure).

The first sipes 9A are inclined in the same direction as the first main grooves 11. The second sipes 9B are inclined in the same direction as the second main grooves 12

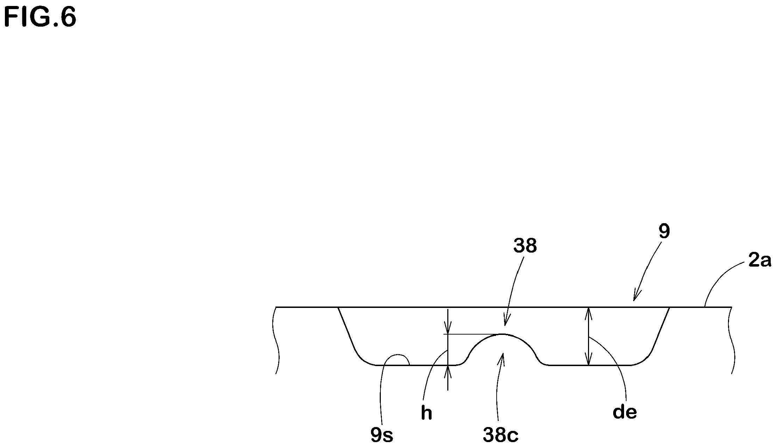

FIG. 6 shows a depth distribution of the sipe 9.

It is preferable that the maximum depth de of the sipe 9 is the same as the maximum groove depth D1 of the main groove 8 (in this example, the first and second main grooves 11 and 12). As a result, the rigidity of the shoulder regions Sh is relaxed, the ground contact property of the shoulder regions Sh with the road surface at the time of turning is improved, and the handling performance is greatly improved.

The bottom 9s of the sipe 9 is provided with at least one protruding portion 38. Such protruding portion 38 appropriately increases the rigidity of the sipe bottom 9s, and suppresses the occurrence of sipe bottom cracks. Further, the protruding portion 38 can improve the handling performance without impairing the grip performance.

In the present embodiment, as shown in FIG. 6, the protruding portion 38 is formed in an arc shape convex toward the radially outside.

In the protruding portion 38, the protruding height h is gradually increased from both ends in the longitudinal direction toward the intermediate position 38c. Such protruding portion 38 suppresses an excessive decrease in the rigidity of the shoulder region Sh.

In the present embodiment, the sipe 9 is provided with only one protruding portion 38 as shown in FIG. 5.

In this case, the protruding portion 38 is arranged at the intermediate position 9c (shown in FIG. 5) of the sipe 9 in the longitudinal direction.

When n protruding portions 38 are provided, it is desirable that the length of the sipe 9 is divided into n equal parts, and the n protruding portions 38 are respectively disposed at intermediate positions in the longitudinal direction of the respective n equal parts (not shown).

In each of the shoulder regions Sh of the tread portion 2 in the present embodiment, the sipes 9 are respectively arranged adjacently to the main grooves 8 (in this example, the first/second main grooves 11/12) on one side in the tire circumferential direction, and
the sipes 9 overlap with the main grooves 8 in the tire axial direction to form overlap portions 39 as shown in FIG. 5.

It is desirable that, when measured on a circumferential line n passing through the overlap portion 39 in parallel to the tire circumferential direction, the circumferentially adjacent sipe 9 and main groove 8 have the same depth. As a result, the rigidity of the shoulder region Sh is appropriately reduced, and the handling performance and the grip performance are enhanced.

In the present embodiment, when measured at any position in the tire axial direction of the overlap portion 39, the sipe 9 and the first main groove 11 have the same depth.

In the present embodiment, the overlap portion 39 has the same length Lg in the tire axial direction as the sipe 9.

In each of the shoulder regions Sh, the sipes 9 are disposed axially outside the intermediate position Si in the axial direction of the shoulder region Sh. Thereby, the rigidity of the shoulder region Sh where the rubber thickness is relatively large is reduced in its axially outer portion, and it becomes possible to improve the handling performance.

In the present embodiment, the axially inner ends 9i of the sipes 9 are located axially outside the intermediate position Si in the tire axial direction of the shoulder region Sh.

The circumferential groove 10 extends circumferentially of the tire along the tire equator C in order to enhance drainage performance.

In the present embodiment, the circumferential groove 10 is composed of alternately arranged first portions 10A and second portions 10B. While the circumferential groove 10 extends in a tire circumferential direction, the first portions 10A are inclined to one side in the tire axial direction, and the second portions 10B are inclined to the other side in the tire axial direction. Thus, the circumferential groove 10 has a zigzag shape. The circumferential groove 10 repeatedly crosses the tire equator C while extending in the tire circumferential direction, therefore, the circumferential groove 10 has axially outwardly protruding portions formed alternately along the tire equator as shown in FIG. 5.

Accordingly, each of the axially outwardly protruding portions has an axially outer groove edge portion 10s and an axially inner groove edge portion 10t.

The circumferential groove 10 in this example is provided with an axially outwardly protruding notch 40 at each of intersecting positions 10k of the first portions 10A and the second portions 10B in order to enhances drainage performance and uneven wear resistance.

The notch 40 is formed at the axially outer groove edge portion 10s.

The notch 40 has a first edge 40a merging into the axially outer groove edge portion 10s, and a second edge 40b intersecting the axially outer groove edge portion 10s at an angle.

With respect to the tire circumferential direction, the second edge 40b is inclined at a larger angle than the first edge 40a.

The first edge 40a suppresses an excessive decrease in rigidity of the tread portion 2 near the tire equator C.

When the second edge 40b is positioned on the toe side in the rotation direction N and the first edge 40a is positioned on the heel side in the rotation direction N, the second edge 40b is useful for discharging water existing between the tread surface 2a and the road surface toward the outside of the circumferential groove 10.

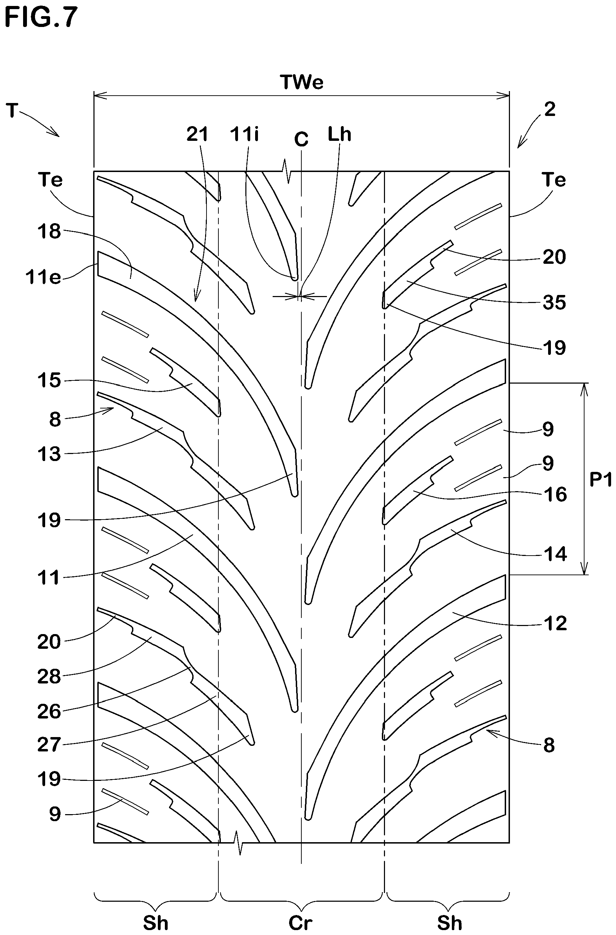

FIG. 7 is a developed partial view of a tread portion 2 of a motorcycle tire 1 as another embodiment of the present invention.

The same components as those of the former embodiment may be designated by the same reference numerals and the descriptions may be omitted.

The tread portion 2 (tread pattern) of this embodiment is suitably used for a tire for a rear wheel of a motorcycle although it may be used for a front tire.

As shown in FIG. 7, the tread portion 2 of this embodiment is provided with the main grooves 8 and the sipes 9, but no circumferential groove is provided. The main grooves 8 of this embodiment are the first to sixth main grooves 11-16.

In this application, also in this embodiment, unless otherwise noted, the descriptions of the first main grooves 11, the third main grooves 13 and the fifth main grooves 15 also serve as the descriptions of the second main grooves 12, the fourth main grooves 14 and the sixth main grooves 16, respectively.

The first main grooves 11 extend from the shoulder region Sh into the crown region Cr without intersecting the tire equator C.

In this embodiment, the axially inner ends 11i of the first main grooves 11 are positioned closer to the tire equator C as compared with the first main grooves 11 of the former embodiment shown in FIG. 1.

The axial distance Lh from the axially inner end 11i to the tire equator C is preferably 3% or less of the developed tread width TWe.

In this embodiment, the widening portion 18 of each of the first main grooves 11 extends to the axially outer end 11e of the first main groove 11

In other words, the first main groove 11 is not provided with the second decreasing-width portion 20. Such first main groove 11 enhances the drainage performance.

In this embodiment, the fifth main grooves 15 extend from the crown region Cr into the shoulder region Sh. Such fifth main grooves 15 appropriately reduce the rigidity from the crown region Cr to the shoulder region Sh.

The motorcycle tire 1 having the tread portion 2 shown in FIG. 1 as a front tire, and the motorcycle tire 1 having the tread portion 2 shown in FIG. 7 as a rear tire constitute a set of front and rear motorcycle tires T.

The developed tread width TWe of the rear tire is larger than that of the front tire. As a result, the rigidity of the shoulder regions Sh of the rear tire becomes higher than the front tire. Thus, it is desirable that the shoulder regions Sh of the rear tire are provided with more sipes 9 than the front tire in order to improve the ground contact property of the rear tire and improve the handling performance.

In the rear tire, as shown in FIG. 7, there are provided two sipes 9 per one pitch P1, namely, between every two of the first main grooves 11.

In the front tire, as shown in FIG. 1, there is provided one sipe 9 per one pitch P1, namely, between every two of the first main grooves 11.

It is desirable that the one pitch P1 of the first main grooves 11 of the rear tire is equal to the one pitch P1 of the first main grooves 11 of the front tire.

It is desirable that the tread portion 2 of the rear tire has a land ratio of 80% or more. Thereby, an excessive decrease in the rigidity of the tread portion 2 of the rear tire is suppressed, and the grip performance is maintained.

The land ratio means a ratio (SB/SA) between the actual ground contacting area SB of the tread surface 2a of the tread portion 2 and the overall surface area SA of the tread portion 2 when it is assumed that neither groove nor sipe is provided.

The rear tire is not significantly affected by the rider's handle operation.

For the rear tire, grip performance is more important than handling performance. Therefore, in the tread portion 2 of the rear tire, it is preferable that the land ratio of the crown region Cr is not less than, more preferably more than the land ratio of each of the shoulder regions Sh.

The land ratios used herein have similar meanings to the land ratio of the tread portion, namely, the actual ground contacting area relative to the overall surface area.

The front tire is greatly affected by the rider's handle operation.

For the front tire, handling performance is more important than grip performance.

Therefore, in the tread portion 2 of the front tire, it is preferable that the land ratio of each of the shoulder regions Sh is not less than, more preferably more than the land ratio of the crown region Cr.

In order to effectively exert the above-described advantageous effects, it is preferred that the land ratio of the tread portion 2 of the front tire is smaller than the land ratio of the tread portion 2 of the rear tire.

Each tire 1 is manufactured by using a vulcanization mold comprising a pair of dies (not shown).

The pair of dies is split in the tire axial direction, and their split position extends in the tire circumferential direction through the tread portion.

In the vulcanization mold for the front tire, the split position is separated from the circumferential groove toward one side in the tire axial direction.

In the vulcanization mold for the rear tire, the split position is positioned at the tire equator C.

While detailed description has been made of especially preferable embodiments of the present invention, the present invention can be embodied in various forms without being limited to the illustrated embodiments.

### Comparison tests

Based on the tread patterns shown in FIG. 1 and FIG. 7, motorcycle tires were experimentally manufactured as test tires (Working examples Ex.1-Ex.7 and Comparative examples Ref.1-Ref.2), and tested for the handling performance, grip performance, drainage performance, uneven wear resistance performance, and high-speed durability performance.

The common specifications of the test tires and test methods are as follows.

### < Handling performance, Grip performance, Uneven wear resistance performance, Durability performance >

The test tires were mounted on the front and rear wheels of a 1500cc street motorcycle under the following conditions.

The test tires for the front wheel had tread patterns based on FIG. 1.

The test tires for the rear wheel had tread patterns based on FIG. 7.

During the motorcycle was running on a dry asphalt road of a test course, the test rider evaluated the handling performance and grip performance. Further, after running, the occurrence of uneven wear and the occurrence of cracks at the groove bottoms and the sipe bottoms were visually checked.

The test results are indicated in Table 1 by an index based on Comparative Example Ref.1 being 100, wherein the higher the numerical value, the better the performance (passing line is 95 or more).

Front tire specifications (tire size, rim, pressure): 110/70-13M/C, 13x3.00MT, 200kPa.

Rear wheel tire specifications (tire size, rim, pressure): 130/70-13M/C, 13x3.50MT, 220kPa.

### < Drainage performance >

During the above-mentioned motorcycle was running on a wet asphalt road of the test course, the test rider evaluated the easiness of running.

The test results are indicated in Table 1 by an index based on Comparative Example Ref.1 being 100, wherein the higher the numerical value, the better the performance (passing line is 95 or more).

The symbols used in Table 1 have the following meanings:
"A": The first main grooves and the second main grooves extended from the crown region into the shoulder regions.
"B": The first main grooves and the second main grooves extended only within the shoulder regions.
"C": The sipes were formed only within the shoulder regions.
"D": No sipe was provided.
"E": The first main grooves, the second main grooves and the sipes were not communicated with each other.
"F": The first main grooves, the second main grooves and the sipes were communicated with each other.
"G": The main grooves and the sipes did not reach to the tread edges.
"H": The main grooves reached to the respective tread edges.
"I": Number of front tire sipes < Number of rear tire sipes
"J": Number of front tire sipes > Number of rear tire sipes
"K": First main groove depth = Sipe depth when measured on circumference direction line passing through overlap portion
"L": First main groove depth > Sipe depth when measured on circumference direction line passing through overlap portion
"M": first main groove had constant-width portion instead of widening portion.

**Table 1**

| Tire | | Ref.1 | Ref.2 | Ex.1 | Ex.2 | Ex.3 |
|---|---|---|---|---|---|---|
| first and second main grooves | | B | A | A | A | A |
| sipes | | C | D | C | C | C |
| arrangement of first and second main grooves and sipes | | E | E | E | F | E |
| tread edges | | G | G | G | G | H |
| rear tire | | | | | | |
| | crown region's land ratio | 86 | 86 | 86 | 86 | 86 |
| | shoulder regions' land ratio | 84 | 84 | 84 | 84 | 84 |
| front and rear tires' sipes | | I | I | I | I | I |
| first main groove depth and sipe depth | | K | K | K | K | K |
| first main groove's widening portion | | present | present | present | present | present |
| handling performance | | 100 | 105 | 120 | 125 | 125 |
| grip performance | | 100 | 90 | 110 | 105 | 105 |
| uneven wear resistance | | 100 | 100 | 105 | 100 | 100 |
| high-speed durability | | 100 | 100 | 100 | 95 | 95 |
| drainage performance | | 100 | 110 | 110 | 115 | 110 |
| | | | | | | |
| Tire | | Ex.4 | Ex.5 | Ex.6 | Ex.7 | |
| first and second main grooves | | A | A | A | A | |
| sipes | | C | C | C | C | |
| arrangement of first and second main grooves and sipes | | E | E | E | E | |
| tread edges | | G | G | G | G | |
| rear tire | | | | | | |
| | crown region's land ratio | 86 | 86 | 86 | 86 | |
| | shoulder regions' land ratio | 88 | 84 | 84 | 84 | |
| front and rear tires' sipes | | I | J | I | I | |
| first main groove depth and sipe depth | | K | K | L | K | |
| first main groove's widening portion | | present | present | present | M | |
| handling performance | | 120 | 115 | 125 | 115 | |
| grip performance | | 100 | 110 | 100 | 105 | |
| uneven wear resistance | | 100 | 100 | 95 | 105 | |
| high-speed durability | | 100 | 100 | 95 | 100 | |
| drainage performance | | 100 | 100 | 115 | 110 | |

From the test results, it was confirmed that the motorcycle tires according to the present invention were superior in the handling performance and grip performance to the comparative example tires.

### DESCRIPTION OF THE REFERENCE SIGNS

- 1: motorcycle tire
- 2: tread portion
- 8: main groove
- 9: sipe
- 11: first main groove
- 12: second main groove
- Cr: crown region
- Sh: shoulder region

## Claims

1. A motorcycle tire (1) comprising:
a carcass (6) having a bias-ply structure, and
a tread portion (2) provided with main grooves (8) and sipes (9), wherein
the tread portion (2) comprises a pair of axially outer shoulder regions (Sh) and a crown region (Cr) therebetween,
the main grooves (8) include first main grooves (11) extending from the crown region (Cr) into one of the shoulder regions (Sh), and second main grooves (12) extending from the crown region (Cr) into the other of the shoulder regions (Sh), and
the sipes (9) are formed only within the shoulder regions (Sh), wherein
the shoulder regions (Sh) are defined as extending axially inwardly from respective tread edges (Te) of the tread portion (2) to have a developed axial width (Ws) of 30 % of a developed axial width (TWe) of the tread portion (2),
**characterized in that** the first main grooves (11), the second main grooves (12) and the sipes (9) are arranged without being connected to each other.

2. The motorcycle tire (1) according to claim 1, wherein
the main grooves (8) have a maximum depth (D1), and the sipes (9) has a maximum depth (de) equal to the maximum depth (D1) of the main grooves (8).

3. The motorcycle tire (1) according to claim 1 or 2, wherein
each of the sipes (9) is arranged adjacently to one of the main grooves (8) in the tire circumferential direction so that the sipe (9) overlaps with the main groove (8) in the tire axial direction to define an overlap portion (39), and the sipe's (9) depth is equal to the main groove's (8) depth when measured on a circumferential line (n) passing through the overlap portion (39) in parallel with the tire circumferential direction.

4. The motorcycle tire (1) according to claim 1, 2, or 3, wherein
the main grooves (8) are each terminated without reaching the respective tread edges (Te).

5. The motorcycle tire (1) according to any one of claims 1 to 3, wherein
the first main grooves (11) and the second main grooves (12) comprise widening portions (18) which are positioned in the shoulder regions (Sh), and in which the groove widths increase axially outward.

6. The motorcycle tire (1) according to claim 5, wherein
the widening portions (18) extend to the axially outer ends of the respective main grooves (8).

7. The motorcycle tire (1) according to any one of claims 1 to 6, wherein
each of the sipes (9) is provided, in its bottom (9s), with a protruding portion (38) where the bottom (9s) is locally raised.

8. The motorcycle tire (1) according to claim 7, wherein
the protruding portion (38) has a radially outwardly convex arc shape in its cross section taken along the longitudinal direction of the sipe (9).

9. The motorcycle tire (1) according to any one of claims 1 to 8, wherein
in each the shoulder regions (Sh), the sipes (9) are offset to the axially outside from an intermediate position (Si) in the tire axial direction of the shoulder region (Sh).

10. A combination (T) of a front tire and a rear tire for motorcycle, wherein
the front tire is the motorcycle tire (1) according to any one of claims 1 to 9, the rear tire is the motorcycle tire (1) according to any one of claims 1 to 9, and
a number of the sipes (9) of the rear tire is larger than a number of the sipes (9) of the front tire.

11. The combination (T) according to claim 10, wherein
the land ratio of the tread portion (2) of the rear tire is 80 % or more.

12. The combination (T) according to claim 10 or 11, wherein
in the tread portion (2) of the rear tire, the land ratio of the crown region (Cr) is not less than the land ratio of the shoulder regions (Sh).

13. The combination (T) according to claim 10, 11 or 12, wherein
the land ratio of the tread portion (2) of the front tire is smaller than the land ratio of the tread portion (2) of the rear tire.

14. The combination (T) according to any one of claims 10 to 13, wherein
in the tread portion (2) of the front tire, the land ratio of the shoulder regions (Sh) is not less than the land ratio of the crown region (Cr).

## Patentansprüche

1. Motorradreifen (1), umfassend:
eine Karkasse (6) mit Radiallagenstruktur, und
einen Laufflächenabschnitt (2), der mit Hauptrillen (8) und Feinschnitten (9) versehen ist,
wobei
der Laufflächenabschnitt (2) ein Paar axial äußeren Schulterbereiche (Sh) und einen Kronenbereich (Cr) dazwischen umfasst,
die Hauptrillen (8) erste Hauptrillen (11), die sich von dem Kronenbereich (Cr) in einen der Schulterbereiche (Sh) erstrecken, und zweite Hauptrillen (12), die sich von dem Kronenbereich (Cr) in den anderen der Schulterbereiche (Sh) erstrecken, umfassen, und
die Feinschnitte (9) nur innerhalb der Schulterbereiche (Sh) gebildet sind,
wobei
die Schulterbereiche (Sh) so definiert sind, dass sie sich von jeweiligen Laufflächenkanten (Te) des Laufflächenabschnitts (2) axial nach innen erstrecken, so dass sie eine axiale Abwicklungsbreite (Ws) von 30 % einer axialen Abwicklungsbreite (TWe) des Laufflächenabschnitts (2) aufweisen,
**dadurch gekennzeichnet, dass** die ersten Hauptrillen (11), die zweiten Hauptrillen (12) und die Feinschnitte (9) ohne Verbindung miteinander angeordnet sind.

2. Motorradreifen (1) nach Anspruch 1, wobei die Hauptrillen (8) eine maximale Tiefe (D1) aufweisen und die Feinschnitte (9) eine maximale Tiefe (de) aufweisen, die gleich der maximalen Tiefe (D1) der Hauptrillen (8) ist.

3. Motorradreifen (1) nach Anspruch 1 oder 2, wobei jeder der Feinschnitte (9) benachbart zu einer der Hauptrillen (8) in der Reifenumfangsrichtung angeordnet ist, so dass der Feinschnitt (9) die Hauptrille (8) in der Reifenaxialrichtung überlappt, um einen Überlappungsabschnitt (39) zu definieren, und die Tiefe des Feinschnitts (9) gleich der Tiefe der Hauptrille (8) ist, wenn sie auf einer Umfangslinie (n) gemessen wird, die durch den Überlappungsabschnitt (39) parallel zu der Reifenumfangsrichtung verläuft.

4. Motorradreifen (1) nach Anspruch 1, 2 oder 3, wobei die Hauptrillen (8) jeweils enden, ohne die jeweiligen Laufflächenkanten (Te) zu erreichen.

5. Motorradreifen (1) nach einem der Ansprüche 1 bis 3, wobei die ersten Hauptrillen (11) und die zweiten Hauptrillen (12) Aufweitungsabschnitte (18) aufweisen, die in den Schulterbereichen (Sh) positioniert sind, und in denen die Rillenbreiten axial nach außen hin zunehmen.

6. Motorradreifen (1) nach Anspruch 5, wobei sich die Aufweitungsabschnitte (18) bis zu den axial äußeren Enden der jeweiligen Hauptrillen (8) erstrecken.

7. Motorradreifen (1) nach einem der Ansprüche 1 bis 6, wobei jeder der Feinschnitte (9) in seinem Grund (9s) mit einem vorspringenden Abschnitt (38) versehen ist, in dem der Grund (9s) örtlich angehoben ist.

8. Motorradreifen (1) nach Anspruch 7, wobei der vorspringende Abschnitt (38) in seinem Querschnitt entlang der Längsrichtung des Feinschnitts (9) eine radial nach außen hin konvexe Bogenform aufweist.

9. Motorradreifen (1) nach einem der Ansprüche 1 bis 8, wobei in jedem der Schulterbereiche (Sh) die Feinschnitte (9) von einer Zwischenposition (Si) in der Reifenaxialrichtung des Schulterbereichs (Sh) nach axial außen hin versetzt sind.

10. Kombination (T) aus einem Vorderreifen und einem Hinterreifen für ein Motorrad, wobei
der Vorderreifen der Motorradreifen (1) nach einem der Ansprüche 1 bis 9 ist,
der Hinterreifen der Motorradreifen (1) nach einem der Ansprüche 1 bis 9 ist, und
eine Anzahl der Feinschnitte (9) des Hinterreifens größer ist als eine Anzahl der Feinschnitte (9) des Vorderreifens.

11. Kombination (T) nach Anspruch 10, wobei das Landverhältnis des Laufflächenabschnitts (2) des Hinterreifens 80 % oder mehr beträgt.

12. Kombination (T) nach Anspruch 10 oder 11, wobei in dem Laufflächenabschnitt (2) des Hinterreifens das Landverhältnis des Kronenbereichs (Cr) nicht kleiner ist als das Landverhältnis der Schulterbereiche (Sh).

13. Kombination (T) nach Anspruch 10, 11 oder 12, wobei das Landverhältnis des Laufflächenabschnitts (2) des Vorderreifens kleiner ist als das Landverhältnis des Laufflächenabschnitts (2) des Hinterreifens.

14. Kombination (T) nach einem der Ansprüche 10 bis 13, wobei in dem Laufflächenabschnitt (2) des Vorderreifens das Landverhältnis der Schulterbereiche (Sh) nicht kleiner ist als das Landverhältnis des Kronenbereichs (Cr).

## Revendications

1. Pneumatique pour motocyclette (1) comprenant :
une carcasse (6) ayant une structure à nappe diagonale, et
une portion formant bande de roulement (2) dotée de rainures principales (8) et de fentes (9), dans lequel
la portion formant bande de roulement (2) comprend une paire de régions d'épaulement axialement extérieures (Sh) et une région de couronne (Cr) entre celles-ci,
les rainures principales (8) incluent des premières rainures principales (11) s'étendant depuis la région de couronne (Cr) jusque dans l'une des régions d'épaulement (Sh), et des secondes rainures principales (12) s'étendant depuis la région de couronne (Cr) jusque dans l'autre des régions d'épaulement (Sh), et
les fentes (9) sont formées uniquement à l'intérieur des régions d'épaulement (Sh), dans lequel
les régions d'épaulement (Sh) sont définies comme s'étendant axialement vers l'intérieur par rapport à des bords de bande de roulement (Te) respectifs de la portion formant bande de roulement (2) pour avoir une largeur axiale développée (Ws) de 30 % d'une largeur axiale développée (TWe) de la portion formant bande de roulement (2),
**caractérisé en ce que** les premières rainures principales (11), les secondes rainures principales (12) et les fentes (9) sont agencées sans être connectées les unes aux autres.

2. Pneumatique pour motocyclette (1) selon la revendication 1, dans lequel les rainures principales (8) ont une profondeur maximum (D1), et les fentes (9) ont une profondeur maximum (de) égale à la profondeur maximum (D1) des rainures principales (8).

3. Pneumatique pour motocyclette (1) selon la revendication 1 ou 2, dans lequel
chacune des fentes (9) est agencée de manière adjacente à l'une des rainures principales (8) dans la direction circonférentielle du pneumatique de telle sorte que la fente (9) est en chevauchement avec la rainure principale (8) dans la direction axiale du pneumatique pour définir une position de chevauchement (39), et la profondeur de la fente (9) est égale à la profondeur de la rainure principale (8) quand elle est mesurée sur une ligne circonférentielle (n) passant à travers la portion de chevauchement (39) parallèlement à la direction circonférentielle du pneumatique.

4. Pneumatique pour motocyclette (1) selon la revendication 1, 2 ou 3, dans lequel
les rainures principales (8) se terminent chacune sans atteindre les bords de bande de roulement (Te) respectifs.

5. Pneumatique pour motocyclette (1) selon l'une quelconque des revendications 1 à 3, dans lequel
les premières rainures principales (11) et les secondes rainures principales (12) comprennent des portions en élargissement (18) qui sont positionnées dans les régions d'épaulement (Sh), et dans lesquelles les largeurs de rainure augmentent axialement vers l'extérieur.

6. Pneumatique pour motocyclette (1) selon la revendication 5, dans lequel les portions en élargissement (18) s'étendent jusqu'aux extrémités axialement extérieures des rainures principales (8) respectives.

7. Pneumatique pour motocyclette (1) selon l'une quelconque des revendications 1 à 6, dans lequel
chacune des fentes (9) est dotée, dans son fond (9s), d'une portion en projection (38) où le fond (9s) est élevé localement.

8. Pneumatique pour motocyclette (1) selon la revendication 7, dans lequel la portion en projection (38) a une forme d'arc radialement convexe vers l'extérieur dans sa section transversale considérée le long de la direction longitudinale de la fente (9).

9. Pneumatique pour motocyclette (1) selon l'une quelconque des revendications 1 à 8, dans lequel
dans chacune des régions d'épaulement (Sh), les fentes (9) sont décalées axialement vers l'extérieur par rapport à une position intermédiaire (Si) dans la direction axiale du pneumatique de la région d'épaulement (Sh).

10. Combinaison (T) d'un pneumatique avant et d'un pneumatique arrière pour motocyclette, dans laquelle
le pneumatique avant est le pneumatique pour motocyclette (1) selon l'une quelconque des revendications 1 à 9,
le pneumatique arrière est le pneumatique pour motocyclette (1) selon l'une quelconque des revendications 1 à 9, et
un nombre des fentes (9) du pneumatique arrière est plus grand qu'un nombre des fentes (9) du pneumatique avant.

11. Combinaison (T) selon la revendication 10, dans laquelle le rapport de relief de la portion formant bande de roulement (2) du pneumatique arrière est de 80 % ou plus.

12. Combinaison (T) selon la revendication 10 ou 11, dans laquelle dans la portion formant bande de roulement (2) du pneumatique arrière, le rapport de relief de la région de couronne (Cr) n'est pas inférieur au rapport de relief des régions d'épaulement (Sh).

13. Combinaison (T) selon la revendication 10, 11 ou 12, dans laquelle le rapport de relief de la portion formant bande de roulement (2) du pneumatique avant est plus petit que le rapport de relief de la portion formant bande de roulement (2) du pneumatique arrière.

14. Combinaison (T) selon l'une quelconque des revendications 10 à 13, dans laquelle
dans la portion formant bande de roulement (2) du pneumatique avant, le rapport de relief des régions d'épaulement (Sh) n'est pas inférieur au rapport de relief de la région de couronne (Cr).
